# EUROPEAN PATENT APPLICATION

(11) **EP 4 492 580 A1**
(43) Date of publication of application: **15.01.2025**
(21) Application number: 24187492.4
(22) Date of filing: 09.07.2024
(51) Int. Cl.: H01R 11/24, B23K 9/32

(54) **ELECTRICALLY INSULATED HAND CLAMPS**

(30) Priority: 11.07.2023 US 202363526084 P; 20.06.2024 US 202418748407
(71) Applicant: Illinois Tool Works Inc., Glenview IL 60025 (US)
(72) Inventor: CHRISTOPHER, Mark R., Glenview, 60025 (US)
(74) Representative: HGF

(57) **Abstract**

Described herein are examples of hand clamps having insulators that isolate the clamp's jaws from the clamp contact assemblies, and/or any electrical current that might pass through the clamp contact assemblies. The attachment of the insulators to the clamp jaws is more secure and/or less susceptible to slippage or breakage than insulators slipped on over the clamp handles. Additionally, insulating the clamp jaws from the contact assemblies serves to insulate the entire hand clamp, rather than just the clamp handles. The insulation allows for the rest of the hand clamps to be made from conductive (e.g., metal) material that is more sturdy and/or less susceptible to breaking and/or melting in harsh, industrial, and/or high heat (e.g., welding) environments than other hand clamps made from insulating (e.g., plastic) material.

## Description

### CROSS REFERENCE TO RELATED APPLICATIONS

This application claims priority to, and the benefit of, U.S. Provisional Patent Application No. 63/526,084, filed July 11, 2023, entitled "Electrically Insulated Hand Clamps," the entire contents of which are hereby incorporated by reference.

### TECHNICAL FIELD

The present disclosure generally relates to hand clamps, and more particularly to electrically insulated hand clamps.

### BACKGROUND

Hand actuated electrical clamps are often used to electrically connect a first electrical conductor to a second electrical conductor through an electrically conductive wire attached to the clamp. One end of the wire may be attached to the first electrical conductor, while the opposite end of the wire is attached to the clamp. Handles of the clamp may be actuated to enable connection of the clamp to the second electrical conductor, thereby bringing the first and second electrical conductors into electrical communication.

Limitations and disadvantages of conventional and traditional approaches will become apparent to one of skill in the art, through comparison of such systems with the present disclosure as set forth in the remainder of the present application with reference to the drawings.

### SUMMARY

The present disclosure is directed to electrically insulated hand clamps, for example, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 illustrates an example of a welding-type system, in accordance with aspects of this disclosure.
FIG. 2a is a perspective view of the example insulated hand clamp of the welding-type system of FIG. 1, in accordance with aspects of this disclosure.
FIGS. 2b-2c are exploded views of the example insulated hand clamp of FIG. 2a, in accordance with aspects of this disclosure.
FIG. 2d is a cross-sectional view of the example insulated hand clamp of FIG. 2a, along the line 2d-2d in FIG. 2a, in accordance with aspects of this disclosure.
FIGS. 3a-3b are examples of an alternative screw fastener that might be used with the example insulated hand clamp of FIG. 2a, in accordance with aspects of this disclosure.
FIGS. 4a-4d are views of an example first alternative insulated hand clamp that might be used in the welding-type system of FIG. 1, in accordance with aspects of this disclosure.
FIG. 5a-5d are views of an example second alternative insulated hand clamp that might be used in the welding-type system of FIG. 1, in accordance with aspects of this disclosure.
FIGS. 6a-6c are views of an example third alternative insulated hand clamp that might be used in the welding-type system of FIG. 1, in accordance with aspects of this disclosure.

The figures are not necessarily to scale. Where appropriate, similar or identical reference numerals are used to refer to similar or identical components. For example, reference numerals utilizing lettering (e.g., widget #a, widget #b) refer to instances of the same reference numeral that does not have the lettering (e.g., widgets #).

### DETAILED DESCRIPTION

The present disclosure contemplates electrically insulating and/or isolating the jaws of a hand clamp from the clamp contact assemblies, and/or any electrical current that might pass through the clamp contact assemblies. While best practice is to handle hand clamps with electrically insulated gloves, it would be beneficial to be able to electrically insulate and/or isolate the hand clamps from any electrical power/current so that the gloves are unnecessary and/or redundant. Though some hand clamps have been made with insulated grips that can be fitted over the clamp handles, these grips tend to slip off and/or wear down, especially in harsh industrial environments. While molding the grips onto/over the clamp handles can help with slippage, this tends to be expensive, and does not help with wear and tear. Additionally, whether overmolded or slipped onto the handles, the insulated grips only insulate the clamp handles, leaving the rest of the hand clamp uninsulated. Though there are hand clamps made almost entirely of insulating plastic, these plastic hand clamps tend to be far more brittle and less durable than conductive (e.g., metal) hand clamps, and also tend to have a lower melting point, which can be an issue in high temperature environments (e.g., welding-type environments).

The present disclosure therefore contemplates hand clamps made from a sturdy conductive (e.g. metal) material that have one or more insulators attached to the clamp's jaws to isolate the clamp's jaws from the clamp contact assemblies, and/or any electrical current that might pass through the clamp contact assemblies. The insulators are small and relatively inexpensive, and attachment of the insulators to the clamp's jaws is more secure and/or less susceptible to slippage or breakage than insulators slipped on over the clamp handles. Additionally, insulating the clamp's jaws from the contact assemblies serves to insulate the entire hand clamp, rather than just the clamp handles. The insulation allows for the rest of the hand clamps to be made from conductive (e.g., metal) material that is more sturdy and/or less susceptible to breaking and/or melting in harsh, industrial, and/or high heat (e.g., welding) environments than other hand clamps made from insulating (e.g., plastic) material.

Some examples of the present disclosure relates to an electrically insulated hand clamp, comprising: a conductive clamp jaw; a clamp contact assembly comprising a conductive contact electrically connected to a conductive lead; and a clamp insulator that electrically insulates the conductive clamp jaw from the contact assembly.

In some examples, the conductive lead comprises a conductive wire or a conductive lug tongue in electrical communication with the conductive wire. In some examples, the conductive lead comprises the conductive lug tongue, the conductive clamp jaw comprises a clamp jaw hole, the conductive lug tongue comprises a lug tongue hole aligned with the clamp jaw hole, and the clamp contact assembly further comprises a fastener extending through the lug tongue hole to electrically connect the conductive contact to the conductive lug tongue. In some examples, the clamp insulator comprises a hollow insulator tube positioned between a conductor of the clamp contact assembly and the clamp jaw within a clamp jaw hole of the conductive clamp jaw, the hollow insulator tube thereby insulating the conductive clamp jaw from the conductor of the clamp contact assembly.

In some examples, the conductor comprises the conductive contact or a fastener of the clamp contact assembly. In some examples, the conductor comprises a first conductor of the clamp contact assembly, the clamp insulator being in further contact with a second conductor of the clamp contact assembly. In some examples, the second conductor comprises the conductive lead, the fastener, the conductive contact, or a conductive washer.

In some examples, the conductive clamp jaw is part of a clamp half comprising a clamp handle and a clamp connecting portion positioned between the clamp handle and the conductive clamp jaw. In some examples, the clamp half comprises a first clamp half, the clamp handle comprises a first clamp handle, the clamp connecting portion comprises a first clamp connecting portion, and the conductive clamp jaw comprises a first conductive clamp jaw, the electrically insulated hand clamp further comprising a second clamp half comprising a second clamp handle, a second conductive clamp jaw, and a second clamp connecting portion positioned between the second clamp handle and the second clamp jaw. In some examples, the first clamp connecting portion comprises first aligned pin holes, and the second clamp connecting portion comprises second aligned pin holes, the electrically insulated hand clamp further comprising: a spring positioned between the first clamp half and the second clamp half, the spring comprising a first end, a second end, and spiral between the first end and second end, the first end of the spring contacting the first clamp half, and the second end of the spring contacting the second clamp half; and a pivot pin connecting the first connecting portion of the first clamp half to the second connecting portion of the second clamp half by extending through the first aligned pin holes in the first clamp half, the second aligned pin holes in the second clamp half, and the spiral of the spring.

Some examples of the present disclosure relate to a welding-type system, comprising: a piece of welding-type equipment; an electrical cable comprising: a first end connected to the piece of welding-type equipment, and a second end comprising a conductive lead; and an electrically insulated hand clamp comprising: a conductive clamp jaw, a clamp contact assembly comprising a conductive contact electrically connected to the conductive lead, and a clamp insulator that electrically insulates the clamp jaw from the contact assembly.

In some examples, the conductive lead comprises a conductive wire or a conductive lug tongue in electrical communication with the conductive wire. In some examples, the conductive lead comprises the conductive lug tongue, the conductive clamp jaw comprises a clamp jaw hole, the conductive lug tongue comprises a lug tongue hole aligned with the clamp jaw hole, and the clamp contact assembly further comprises a fastener extending through the lug tongue hole to electrically connect the conductive contact to the conductive lug tongue. In some examples, the clamp insulator comprises a hollow insulator tube positioned between a conductor of the clamp contact assembly and the clamp jaw within a clamp jaw hole of the conductive clamp jaw, the hollow insulator tube thereby insulating the clamp jaw from the conductor of the clamp contact assembly.

In some examples, the conductor comprises the conductive contact or a fastener of the clamp contact assembly. In some examples, the conductor comprises a first conductor of the clamp contact assembly, the clamp insulator being in further contact with a second conductor of the clamp contact assembly. In some examples, the second conductor comprises the conductive lead, the fastener, the conductive contact, or a conductive washer.

In some examples, the conductive clamp jaw is part of a clamp half comprising a clamp handle and a clamp connecting portion positioned between the clamp handle and the clamp jaw. In some examples, the clamp half comprises a first clamp half, the clamp handle comprises a first clamp handle, the clamp connecting portion comprises a first clamp connecting portion, and the conductive clamp jaw comprises a first conductive clamp jaw, the electrically insulated hand clamp further comprising a second clamp half comprising a second clamp handle, a second conductive clamp jaw, and a second clamp connecting portion positioned between the second clamp handle and the second conductive clamp jaw. In some examples, the first clamp connecting portion comprises first aligned pin holes, and the second clamp connecting portion comprises second aligned pin holes, the electrically insulated hand clamp further comprising: a spring positioned between the first clamp half and the second clamp half, the spring comprising a first end, a second end, and spiral between the first end and second end, the first end of the spring contacting the first clamp half, and the second end of the spring contacting the second clamp half; and a pivot pin connecting the first connecting portion of the first clamp half to the second connecting portion of the second clamp half by extending through the first aligned pin holes in the first clamp half, the second aligned pin holes in the second clamp half, and the spiral of the spring.

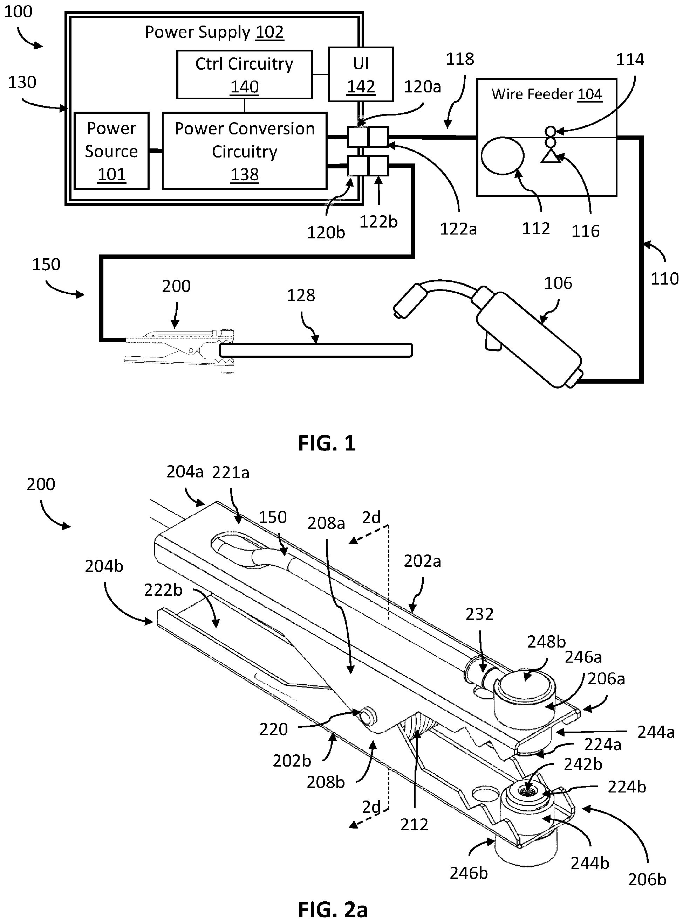

FIG. 1 shows an example engine-driven welding-type system 100 in which an insulated hand clamp 200 may be used. It should be appreciated that, while the example welding-type system 100 shown in FIG. 1 may be described as a gas metal arc welding (GMAW) system, the presently disclosed system 100 may also be used with other arc welding processes (e.g., flux-cored arc welding (FCAW), gas shielded flux-cored arc welding (FCAW-G), gas tungsten arc welding (GTAW), submerged arc welding (SAW), shielded metal arc welding (SMAW), or similar arc welding processes) or other metal fabrication systems, such as plasma cutting systems, induction heating systems, and so forth. In some examples, the disclosure may also be applied outside of welding-type systems.

In the example of FIG. 1, the welding-type system 100 includes a welding-type power supply 102, a wire feeder 104, an insulated hand clamp 200, and a tool 106. In the example of FIG. 1, the tool 106 is shown as being a welding-type tool, such as, for example, a welding torch or plasma cutter. In the example of FIG. 1, the tool 106 is connected to the wire feeder 104 via feeder cable 110.

In the example of FIG. 1, the wire feeder 104 houses a wire spool 112 that is used to provide the tool 106 with a wire electrode (e.g., solid wire, cored wire, coated wire). In the example of FIG. 1, the wire feeder 104 further includes rollers 114 configured to feed the wire electrode to the tool 106 (e.g., from the spool 112) and/or retract the wire electrode from the tool 106 (e.g., back to the spool 112). As shown, the wire feeder 104 further includes a motor 116 configured to turn one or more of the rollers 114, so as to feed the wire electrode to the tool 106 via the feeder cable 110.

In the example of FIG. 1, the wire feeder 104 is connected to the welding-type power supply 102 via power cable 118. As shown, the power cable 118 is connected to an electrical socket 120a of the welding-type power supply 102 via a power plug 122a at the end of the power cable 118. While not specifically labeled, in some examples, the welding wire feeder 104 may include one or more sockets and/or plugs as well. In some examples, the wire feeder 104 may route power received from the welding-type power supply 102 (e.g., via power cable 118) to the tool 106 (e.g., via feeder cable 110) along with the wire electrode.

In some examples, the tool 106 may instead be directly connected to the power supply 102, rather than connected through the wire feeder 104. For example, the wire feeder 104 may be omitted from the system 100 entirely. As another example, the wire feeder 104 may be integrated into the power supply 102, such that there is no need for the power supply 102 to connect to the tool 106 through the wire feeder 104.

In the example of FIG. 1, the welding-type power supply 102 includes control circuitry 140 and power conversion circuitry 138 enclosed within a housing 130. In some examples, the power conversion circuitry 138 is configured to convert input power (e.g., from an input power source 101) to output power (e.g., welding-type output power, auxiliary output power, and/or other power). In some examples, the input power source 101 may be a mains power source, battery power source, and/or engine-generator power source. In some examples, the power conversion circuitry 138 may include circuit elements (e.g., transformers, rectifiers, capacitors, inductors, diodes, transistors, switches, and so forth) capable of converting the input power to output power.

In some examples, the power conversion circuitry 138 may include one or more controllable circuit elements. In some examples, the controllable circuit elements may comprise circuitry configured to change states (e.g., fire, trigger, turn on/off, close/open, etc.) based on one or more control signals. In some examples, the state(s) of the controllable circuit elements may impact the operation of the power conversion circuitry 138, and/or impact characteristics (e.g., current/voltage magnitude, frequency, waveform, etc.) of the output power provided by the power conversion circuitry 138. In some examples, the controllable circuit elements may comprise, for example, switches, relays, transistors, etc. In examples where the controllable circuit elements 204 comprise transistors, the transistors may comprise any suitable transistors, such as, for example MOSFETs, JFETs, IGBTs, BJTs, etc.

In the examples of FIG. 1, the welding-type power supply 102 includes control circuitry 140 electrically coupled to the power conversion circuitry 138. In some examples, the controllable circuit elements of the power conversion circuitry 138 may be controlled by (and/or receive control signals from) the control circuitry 140 of the welding-type power supply 102. In some examples, the control circuitry 140 operates to control the power conversion circuitry 138, so as to ensure the power conversion circuitry 138 generates the appropriate output power.

In some examples, the control circuitry 140 comprises processing circuitry (e.g., in the form of one or more processor) and/or memory circuitry. In some examples, the processing circuitry may use data stored in the memory circuitry to execute control algorithms to control the power conversion circuitry 138. In some examples, the control circuitry 140 may control the power conversion circuitry based on weld parameters (e.g., target voltage/current), welding processes, and/or other weld settings input programmatically and/or input by an operator.

In the example of FIG. 1, the welding-type power supply 102 is further shown as including a user interface (UI) 142 coupled to the control circuitry 140. The UI 142 and electrical sockets 120 are shown as extending across the housing 130 to indicate that the component(s) may be positioned in, on, and/or extend beyond the housing 130. In some examples, the UI 142 may receive weld settings input by an operator and communicate the weld settings/parameters to the control circuitry 140 via the coupling with the control circuitry 140.

In some examples, the UI 142 may include one or more input devices (e.g., by which weld setting may be received) and/or output devices (e.g., by which power supply status may be communicated to the operator). In some examples, input devices may include switches, knobs, levers, buttons, touch screens, microphones, and/or other output devices. In some examples, output devices may include display screens, gauges (e.g., a fuel gauge), speakers, lights, and/or other output devices.

In the example of FIG. 1, the welding-type power supply 102 supplies power to the tool 106, wire electrode, and/or insulated hand clamp 200 through the electrical sockets 120. In some examples, the power provided through the electrical sockets 120 may be welding-type output power. As shown, the electrical sockets 120 are electrically connected to power conversion circuitry 138 of the welding-type power supply 102.

As discussed above, one socket 120a of the welding-type power supply 102 is connected to the tool 106 (e.g., through the plug 120a and wire feeder 104). In the example of FIG. 1, the other electrical socket 120b of the welding-type power supply 102 is coupled to insulated hand clamp 200 through plug 122b and clamp cable 150. As shown, the insulated hand clamp 200 holds a workpiece 128, and/or electrically connects the workpiece 128 to the welding-type power supply 102 (e.g., via the clamp cable 150 and/or plug 122b).

In some examples, the workpiece 128 and tool 106 (and/or wire electrode) may form a circuit by way of their electrical connection to the welding-type power supply 102. The circuit formed from the workpiece 128 and tool 106 (and/or wire electrode) may be open until closed and/or completed by a welding arc. In some examples, a welding arc is formed between the tool 106 (and/or wire electrode) and the workpiece 128 using power from the welding-type power supply 102 when a welding-type process is initiated (e.g., via activation of a trigger of the tool 106). When the welding-type process is initiated, and the circuit is closed/completed, electrical current may travel through the clamp cable 150 to/from the insulated hand clamp 200 as part of the electrical current flowing through the circuit.

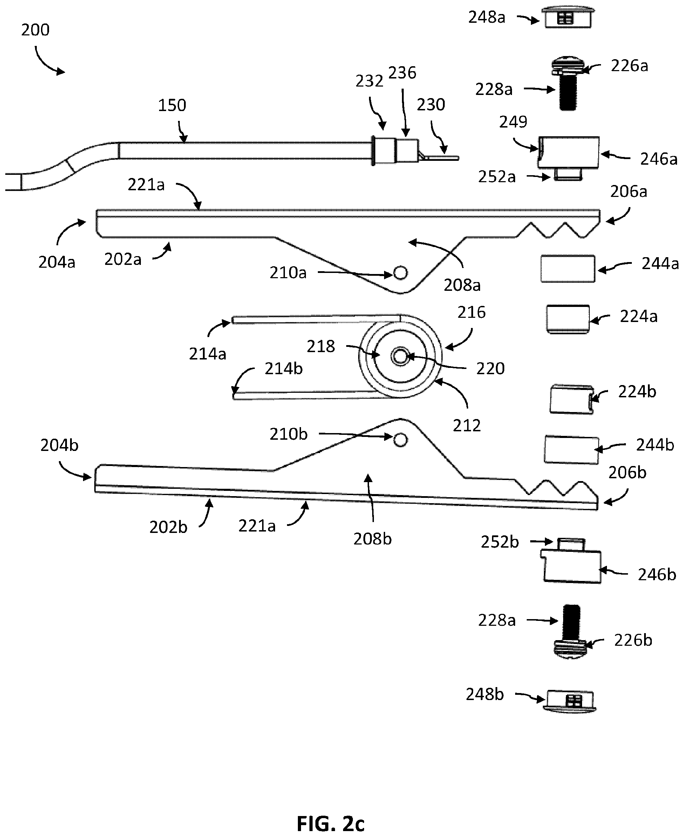

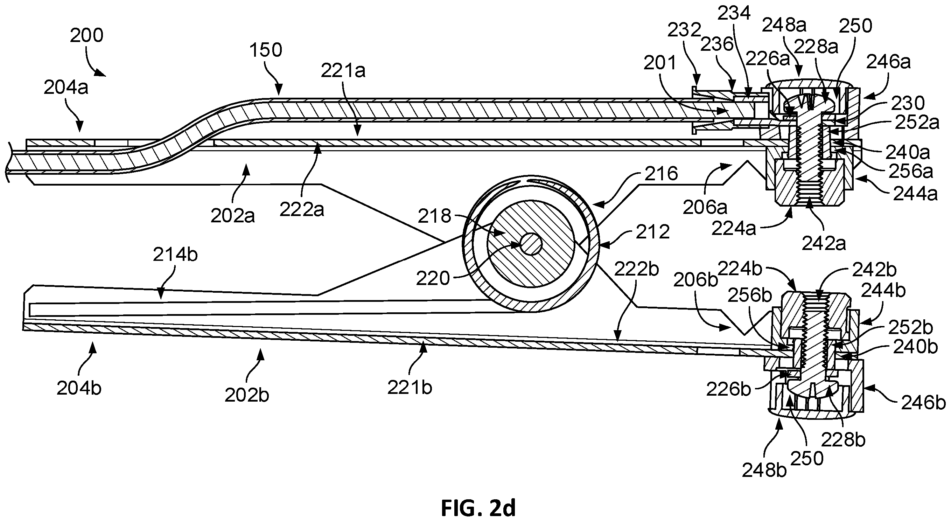

In particular, electrical current may travel through the insulated clamp cable 150 to/from a stripped and/or unsheathed wire 201 at an end of the clamp cable 150 (see, e.g., FIG. 2d). As the stripped/unsheathed wire 201 is electrically connected to a clamp contact assembly of the insulated hand clamp 200, and the clamp contact assembly is further in electrical contact with the workpiece 128, the electrical current is able to flow to/from the wire 201 of the clamp cable 150 to the workpiece 128, through the clamp contact assembly of the insulated hand clamp 200. Because the insulated hand clamp 200 electrically insulates and/or isolates the clamp contact assembly from the rest of the insulated hand clamp 200, the electrical current will never flow through any portion of the insulated hand clamp 200 other than the clamp contact assembly.

FIGS. 2a-2d show enlarged views of the insulated hand clamp 200. As shown, the hand clamp 200 includes two clamp halves 202. In some examples, each clamp half 202 is made of an electrically conductive material, such as, for example, a metal material. As shown, each clamp half 202 comprises a clamp handle 204, a clamp jaw 206, and a clamp connecting portion 208.

In the examples of FIGS. 2a-2d, each clamp connecting portion 208 includes a set of aligned pin holes 210. Positioned between each set of pin holes 210 is a spring 212 (e.g., torsion spring, compression spring, etc.). The spring 212 has two legs 214 that are connected via a spiral coil 216. A cylinder 218 having a conduit through its center is positioned within the spiral coil 216, and a pin 220 is extended through the conduit of the cylinder 218 and pin holes 210 of each clamp half 202 to connect the two clamp halves 202 together around the spring 212.

Each leg 214 of the spring 212 contacts an inner surface 222 of the clamp handle 204. In some examples, a spring force of the spring 212 acts upon the clamp handle 204 through the contact between the spring leg 214 and clamp handle 204. In some examples, the spring force of the spring 212 biases the clamp handles 204 to a position where the clamp handles 204 are spaced apart (e.g., as shown in FIG. 2a). In some examples, the legs 214 of the spring 212 may contact (and/or the spring biasing force may act upon) the clamp jaws 206 rather than the clamp handles 204.

In some examples, a compressive force from a human hand squeezing the clamp handles 204 together may overcome this spring force, and cause the clamp halves 202 to pivot about the pin 220 to a position where the clamp handles 204 are closer together, while the clamp jaws 206 are farther apart. In this way, the clamp jaws 206 of the hand clamp 200 may be widened so that the workpiece 128 fits in the space between the clamp jaws 206. Once the clamp handles 204 are released, the biasing spring force of the spring 212 may cause the clamp halves 202 to pivot in the opposite direction, such that the clamp handles 204 are moved farther apart, while the clamp jaws 206 are moved closer together, thereby "clamping" the workpiece 128 between the clamp jaws 206 using the force of the spring 212.

Between the clamp jaws 206 of the hand clamp 200 are electrically conductive clamp contacts 224. When the clamp jaws 206 are forced together by the spring 212 to clamp against the workpiece 128, it is the clamp contacts 224 that actually make contact with the workpiece 128. An electrical connection with the workpiece 128 is thereby established through electrical contact with at least one of the clamp contacts 224.

In the example of FIG. 2d, the upper clamp contact 224a is electrically connected to the wire 201 through an electrically conductive upper washer 226a, electrically conductive upper screw fastener 228a, and electrically conductive lug tongue 230. As shown, the conductive lug tongue 230 is part of an insulated lug 232 comprising the conductive lug tongue 230 and an electrically conductive connector 234 that is electrically connected to the conductive lug tongue 230 and positioned within an electrically insulating lug sheath 236. The conductive connector 234 makes electrical contact with the wire 201 within the lug sheath 236, and the conductive lug tongue 230 extends from the connector 234 to a place outside the lug sheath 236, where the conductive lug tongue 230 is electrically connected to the upper clamp contact 224a by the electrically conductive upper washer 226a and/or electrically conductive upper screw fastener 228a.

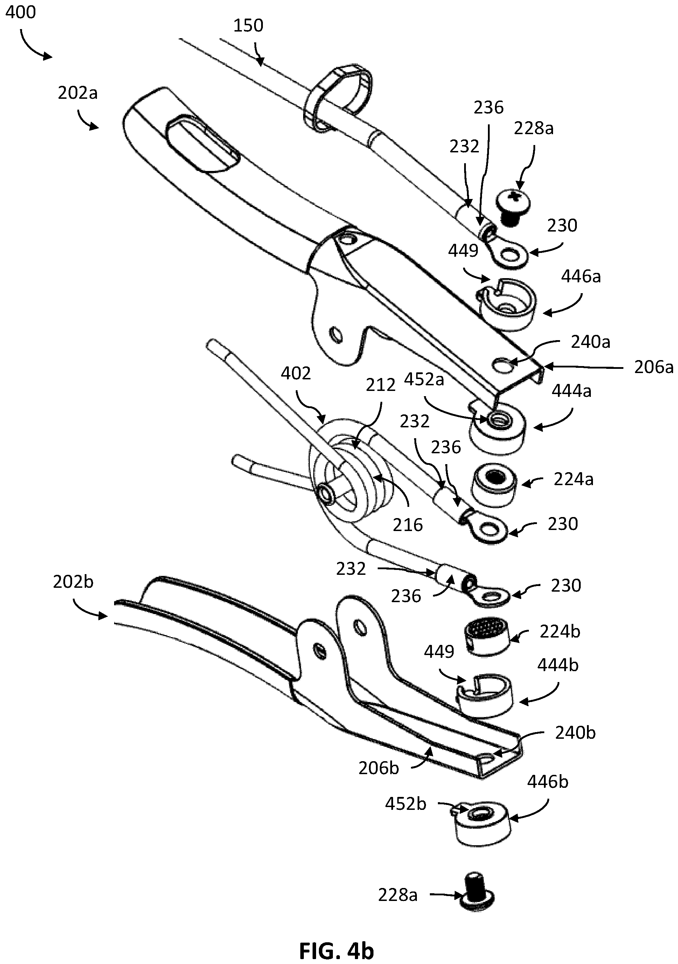

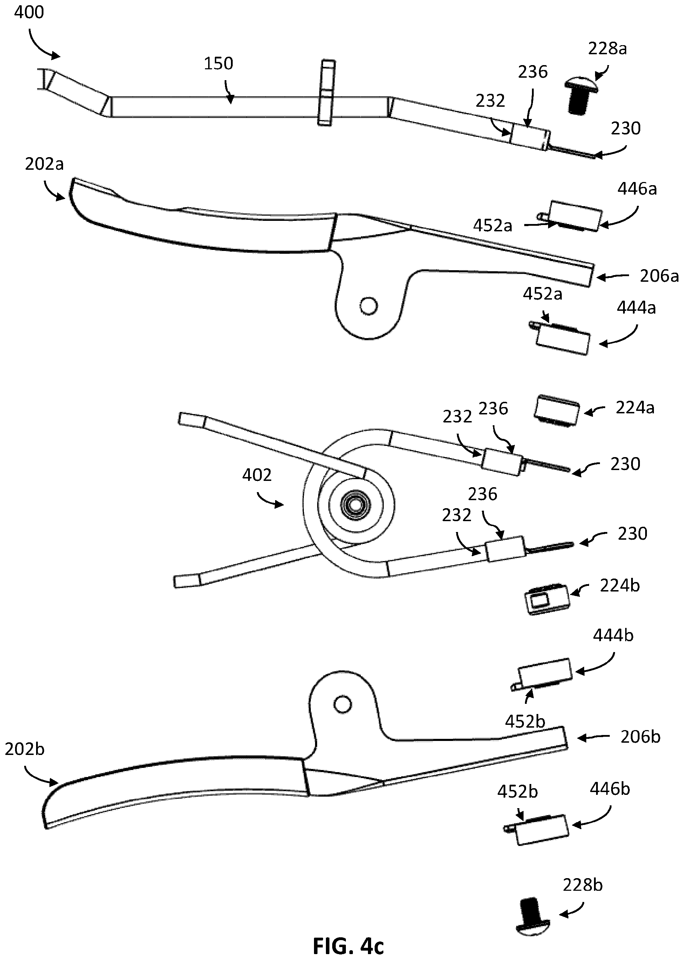

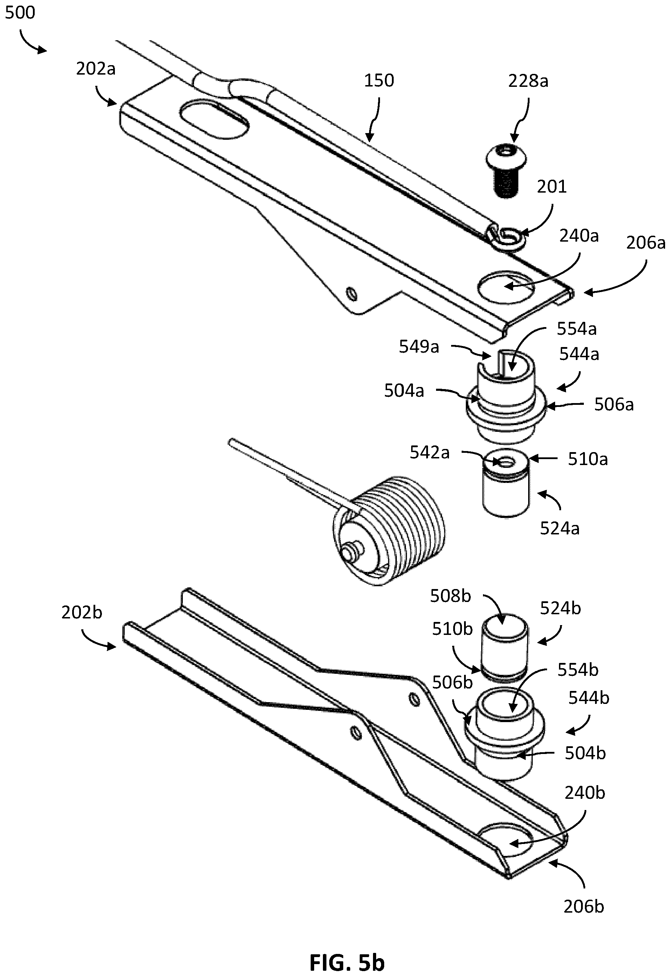

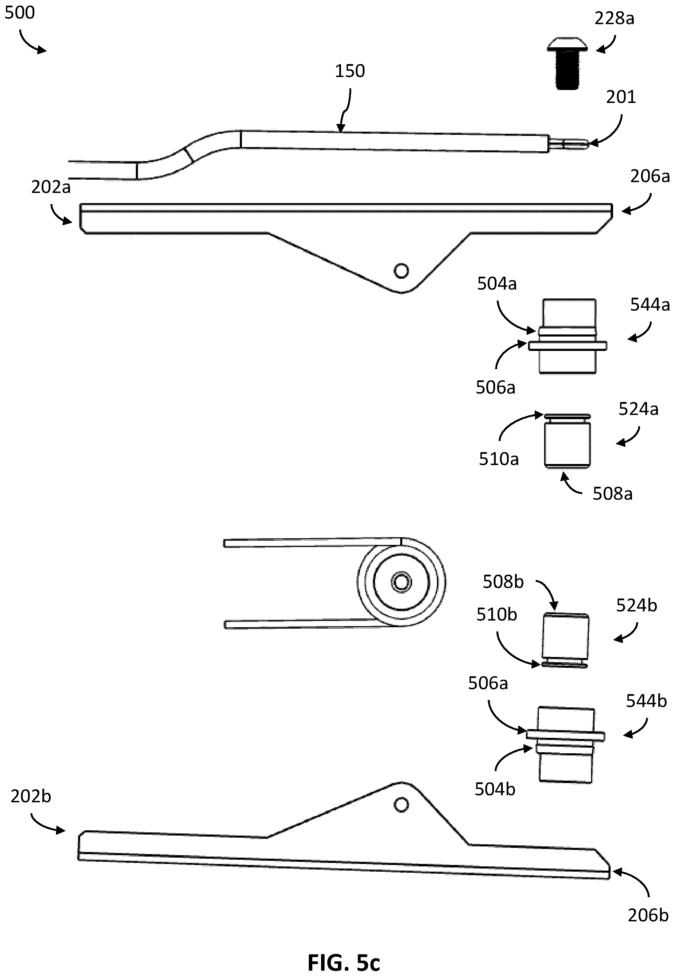

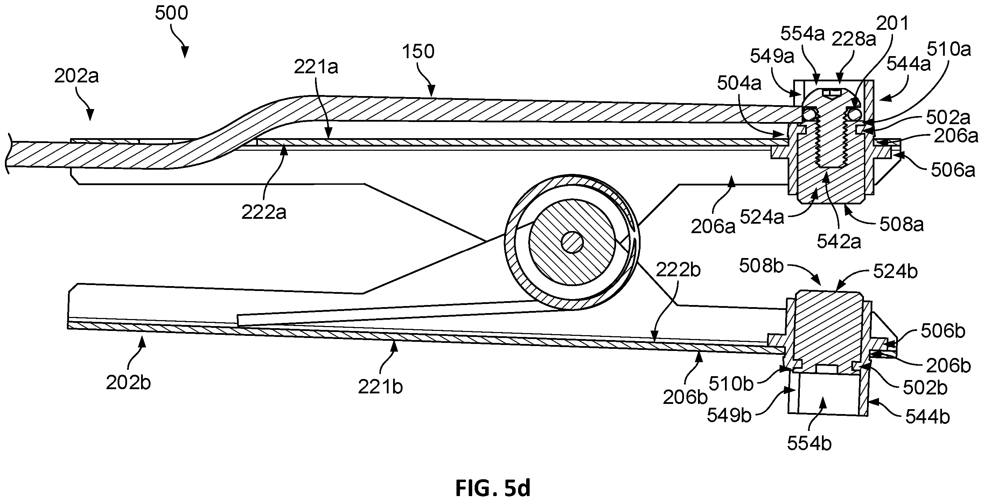

In some examples, the insulated lug 232 may be omitted, and the stripped/unsheathed wire 201 may instead be connected to the upper clamp contact 224a without the aid of the conductive lug tongue 230 (see, e.g., FIGS. 4b-4d and 5b-5c). In some examples, either the stripped/unsheathed wire 201 and/or the conductive lug tongue 230 may be considered an electrical lead of the clamp cable 150.

While shown as being positioned atop an outer surface 221a of the upper clamp half 202a in the example of FIGS 2a-2d, in some examples, the electrical lead may instead be positioned between the clamp halves 202 proximate the inner surface 222a of the upper clamp half 202a. While the electrical lead is shown as being connected to the upper clamp contact 224a by the upper screw fastener 228a, in some examples, the electrical lead may instead be connected to the clamp contact 224 by other fastening means (e.g., soldering, frictional fit of lead into barrel 242 of clamp contact 224, etc.).

In the examples of FIGS 2a-2d, the lug tongue 230 includes a lug hole 238. As shown, the upper clamp jaw 206a includes an upper clamp jaw hole 240a aligned with the lug hole 238. The upper clamp contact 224a further includes an upper contact barrel 242a aligned with the upper clamp jaw hole 240a and lug hole 238. An upper washer hole of the upper washer 226 is further aligned with the upper contact barrel 242a, upper clamp jaw hole 240a, and lug hole 238. As shown, the upper screw fastener 228a extends through the upper washer hole, upper clamp jaw hole 240, and lug hole 238 into the upper contact barrel 242.

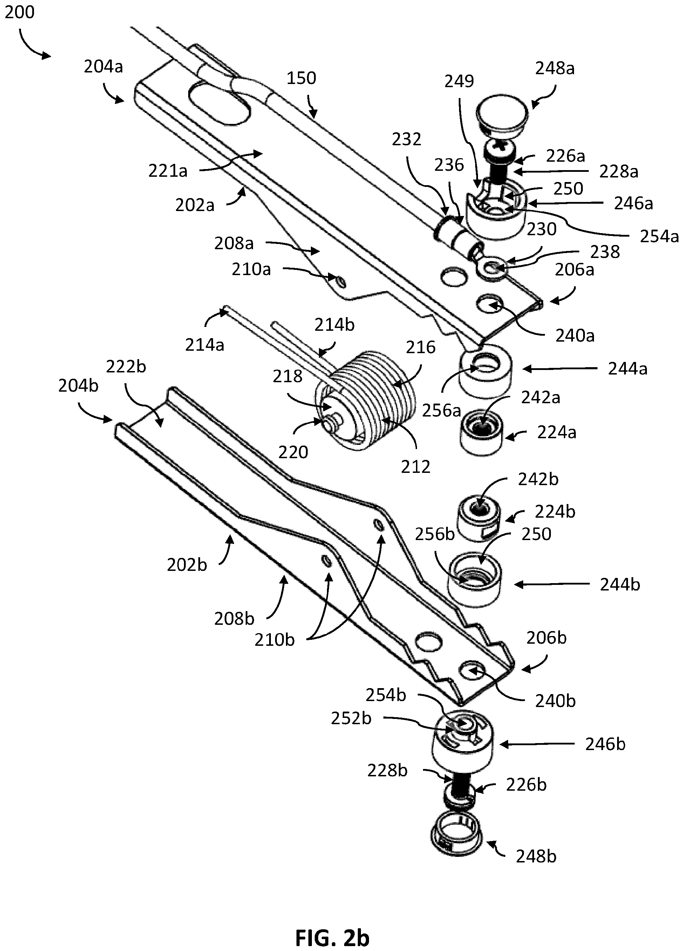

In the example of FIGS. 2b-2d, the upper screw fastener 228a has engagement features (e.g., screw threads) formed on its shank. FIG. 2d shows the engagement features of the upper screw fastener 228a engaged with complementary engagement features formed in and/or around the upper contact barrel 242a of the upper clamp contact 224a to connect the upper screw fastener 228a to the upper clamp contact 224.

As the upper screw fastener 228a is conductive, the connection of the upper screw fastener 228a to the upper clamp contact 224a is an electrical connection. Further, because the conductive lug tongue 230 is electrically connected to the conductive upper screw fastener 228a through the conductive upper washer 226, the connection of the upper screw fastener 228a to the upper clamp contact 224a electrically connects the conductive lug tongue 230 to the upper clamp contact 224a. In some examples, the upper clamp contact 224a, upper screw fastener 228a, and upper washer 226a may collectively be considered to be an upper clamp contact assembly.

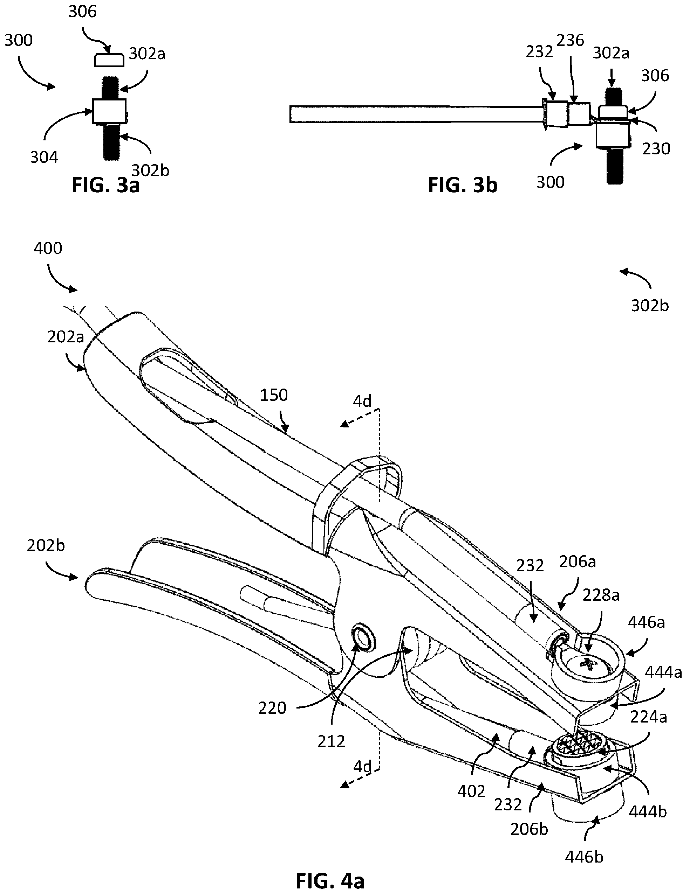

In some examples, the lower clamp contact 224b, lower screw fastener 228b, and lower washer 226b may collectively be considered to be a lower clamp contact assembly. In the example of FIG. 2d, the lower clamp contact assembly is connected together through a lower clamp jaw hole 240b in a similar way as described above with respect to the upper clamp contact assembly. While there is no insulated lug 232 connected to the lower clamp contact assembly in FIGS. 2a-2d, in some examples an insulated lug 232 may additionally, or alternatively, be connected to the lower clamp contact assembly as well, such as shown, for example, in FIGS. 3a-3d. If no lead is connected to lower clamp contact assembly, the lower screw fastener 228b need not be conductive.

In the examples of FIGS. 2a-2d, each clamp jaw 206 is insulated and/or isolated from its respective clamp contact assembly (and/or conductive lead) by an insulator assembly. Each insulator assembly is made of an electrically insulating (and/or non-conductive) material, such as, for example, rubber, plastic, ceramic, wood, glass (e.g., fiberglass), foam, and/or silica. In the examples of FIGS. 2a-2d, each insulator assembly includes an inner insulator cup 244, an outer insulator cup 246, and an insulator cap 248.

In the examples of FIGS. 2a-2d, the outer insulator cup 246 and inner insulator cup both include a hollow basin 250 defined by annular sidewalls and an annular base. As shown, the basin 250 of the inner insulator cup 244 receives the conductive contact 224. The basin of both outer insulator cups 246 receives the conductive washer 226 and conductive screw fastener 228, and the basin 250 of the upper outer insulator cup 246a additionally receives the conductive lug tongue 230 (and/or other lead). In the case of at least the upper outer insulator cup 246a, the sidewalls of the upper outer insulator cup 246a include a cutout 249 through which the conductive lug tongue 230 extends.

In the example of FIGS 2a-2d, the base of each outer insulator cup 246 is further integrally connected with an insulator tube 252 that defines a tube conduit 254 that terminates at the base of the outer insulator cup 246. The tube conduit 254 is aligned with the upper washer hole of upper washer 226, contact barrel 242, clamp jaw hole 240, and lug hole 238 (e.g., with respect to at least the upper tube conduit 254a). The tube conduit 254 is further aligned with a cup hole 256 in the base of the inner insulator cup 244.

In the examples of FIG. 2d, the insulator tube 252 extends through the clamp jaw hole 240 and cup hole 256 into the basin 250 of the inner insulator cup 244. In some examples, the cup hole 256 may be sized to snugly fit the insulator tube 252, such that the outer insulator cup 246 and inner insulator cup 244 frictionally fit together (e.g., snap fit) when the insulator tube 252 is received by the cup hole 256. As shown, an insulator cap 248 closes the basin 250 of the outer insulator cup 246, such that the screw fastener 228 and conductive washer 226 (and/or conductive lead) are closed off from outside access. In some examples, cap sidewalls of the insulator cap 248 may contact and/or snugly fit within the confines of the outer insulator cup 246. In some examples, the insulator cap 248 may have a cap cutout aligned with the cup cutout 249 of the upper outer insulator cup 246.

In the example of FIG 2d, the base of the outer insulator cup 246 is in contact with the outer surface 221 of the clamp jaw 206, and sandwiched between the outer surface 221 of the clamp jaw 206 and the conductive lug tongue 230 (e.g., with respect to at least the upper outer insulator cup 246a), conductive washer 226, and conductive screw fastener 228. The base of the inner insulator cup 244 is in contact with the inner surface 222 of the clamp jaw 206, and sandwiched between the inner surface 222 of the clamp jaw 206 and the conductive clamp contact 224. The insulator tube 252 is in contact with the portion of the clamp jaw 206 (e.g., between the inner surface 222 and outer surface 221) defining the clamp jaw hole 240, and is sandwiched between the portion of the clamp jaw 206 and the shank of the screw fastener 228. In this way, the clamp insulator assembly prevents the clamp contact assembly (and/or lead of the clamp cable 150) from making (e.g., electrical) contact with either clamp half 202, thereby electrically insulating and/or isolating the clamp halves 202 from any electrical current that might pass through the clamp contact assembly (e.g., when traveling to/from the clamp cable 150 and/or the workpiece 128).

While the screw fastener 228a is shown as comprising a head and shank in the examples of FIGS. 2a-2d, in some examples, the screw fastener 228a may instead comprise an alternative screw fastener 300, having two (e.g., threaded) shanks 302 separated by a middle portion 304 (see, e.g., FIG. 3a). In such examples, the upper shank 302a of the alternative screw fastener 300 may extend through the lug hole 238, and a conductive nut 306 may secure the conductive lug tongue 230 in place on top of the middle portion 304 of the alternative screw fastener 300 (see, e.g., FIG. 3b). Alternatively, the wire 201 may be wrapped around the upper shank 302. In either case, the lower shank 302b may be positioned as normal in the contact barrel 242 of the clamp contact 224, and the conductive washer 226 may be included or excluded as desired. By using the alternative (double shanked) screw fastener 300, the insulated hand clamp 200 may be configured to easily accept any lead (e.g., conductive lug tongue 230 and/or wire 201), and/or easily swap leads in and/or out.

FIGS 4a-4d show examples of a first alternative insulated hand clamp 400. The first alternative insulated hand clamp 400 is similar to the insulated hand clamp 200 of FIGS. 2a-2d in many respects. Though slightly differently shaped, the first alternative insulated hand clamp 400 still includes two clamp halves 202 adjoined around a spring 212 via a pin 220. Additionally, the first alternative insulated hand clamp 400 also includes similar clamp contact assemblies (e.g., clamp contacts 224 and screw fasteners 228).

Though shown with screw fasteners 228 in FIGS. 4a-4d, in some examples, the first alternative insulated hand clamp 400 may use alternative fasteners 300 and/or nuts 306. While shown without the connecting cylinder 218 in FIGS. 4a-4d, in some examples, the cylinder 218 may also be included. Though the conductive washers 226 are shown as being omitted, in some examples, the conductive washers 226 may still be included.

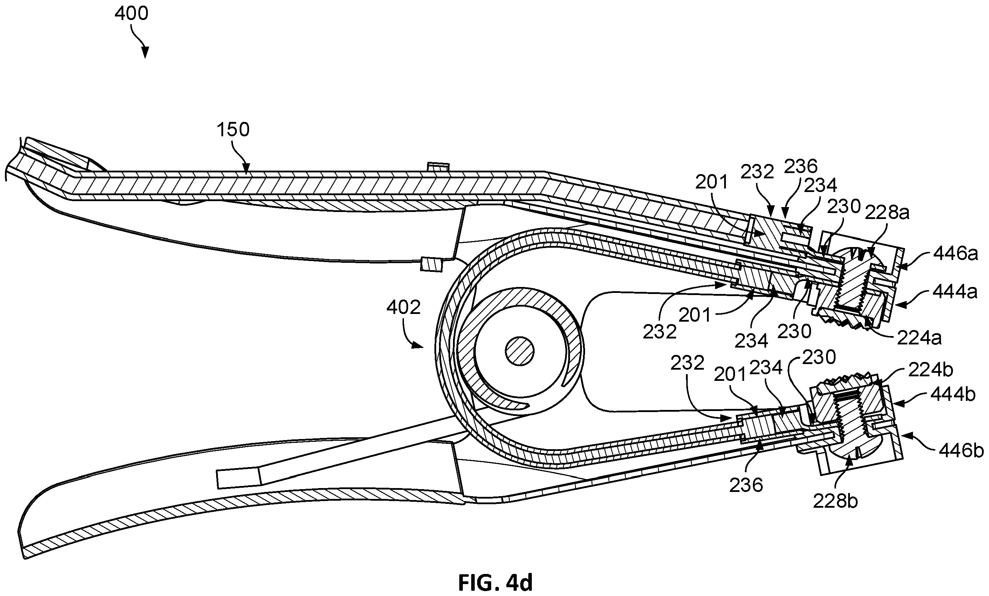

Where the first alternative insulated hand clamp 400 of FIGS. 4a-4d primarily differs from the insulated hand clamp 200 of FIGS. 2a-2d is in a first alternative insulator assembly, and an insulated clamp contact cable 402. As shown, the insulated clamp contact cable 402 is positioned between the clamp halves 202, and wraps around the spiral coil 216 of the spring 212 between the clamp halves 202 to connect the upper clamp contact 224a (and/or upper clamp contact assembly) with the lower clamp contact 224b (and/or lower clamp contact assembly). Both ends of the clamp contact cable 402 terminate at insulated lugs 232 (though, in some examples, the clamp contact cable 402 may instead terminate at stripped/unsheathed wires 201). In the example of FIG. 4d, each insulated lug 232 of the clamp contact cable 402 has a lug connector 234 connected with a stripped wire 201 of the clamp contact cable 402, and a conductive lug tongue 230 connected to a clamp contact 224 (and/or clamp contact assembly).

The first alternative insulator assembly has first alternative outer insulator cups 446 that are identical to first alternative inner insulator cups 444. Thus, both the first alternative outer insulator cups 446 and first alternative inner insulator cups 444 have cutouts 449 in their cup sidewalls to accommodate the lug tongues 230 extending from the clamp contact cable 402. Additionally, both the first alternative outer insulator cups 446 and first alternative inner insulator cups 444 are connected to first alternative insulator tubes 452.

However, the first alternative insulator tubes 452 of FIGS. 4a-4d are shorter than the insulator tubes 252 of FIGS. 2a-2d. The first alternative insulator tubes 452 are sized such that each extends halfway through the clamp jaw hole 240. Thus, instead of extending all the way through the clamp jaw holes 240, each first alternative insulator tube 252 only extends partway through a clamp jaw hole 240, and abuts the opposite first alternative insulator tube 252 within the clamp jaw hole 240.

Since both the first alternative outer insulator cups 446 and the first alternative inner insulator cups 444 include first alternative insulator tubes 452, and both first alternative insulator tubes 452 are half the length of the clamp jaw hole 240, the first alternative insulator tubes 452 continue to insulate the clamp jaw 206 from the screw fastener 228 passing through the clamp jaw hole 240. And the bases of the first alternative outer insulator cups 446 and first alternative inner insulator cups 444 continue to insulate and/or isolate the clamp halves 202 from remaining portions of the clamp contact assemblies, similar to the outer insulator cups 246 and inner insulator cups 244 of the insulated hand clamp 200 of FIGS. 2a-2d.

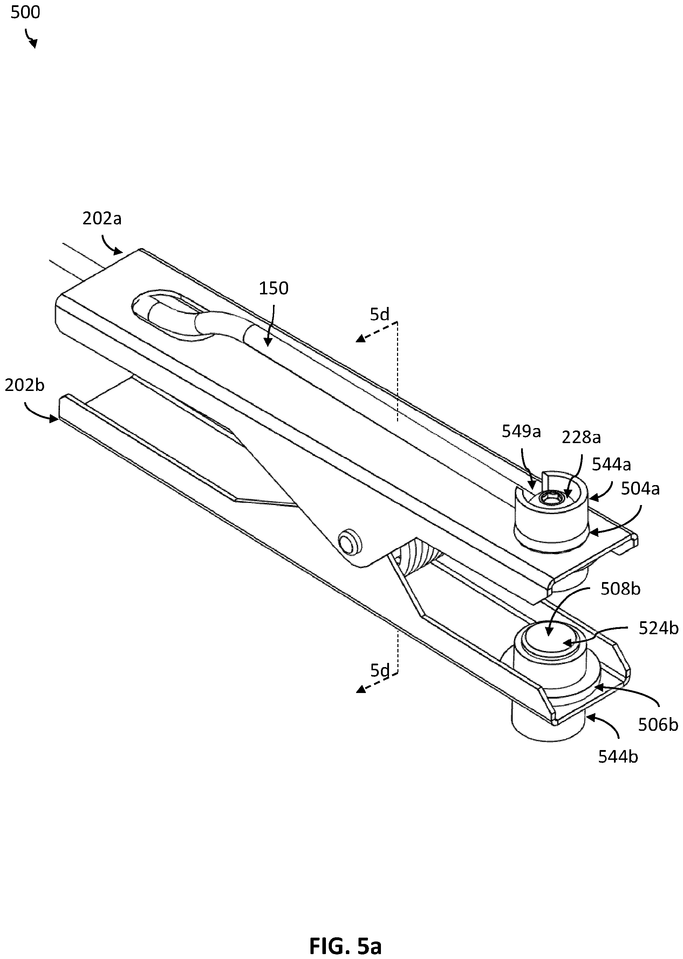

FIGS. 5a-5d show examples of a second alternative insulated hand clamp 500. The second alternative insulated hand clamp 500 is similar to the insulated hand clamp 200 of FIGS. 2a-2d in many respects. However, unlike the insulated hand clamp 200 of FIGS. 2a-2d, the second alternative insulated hand clamp 500 includes single piece second alternative insulators 544 instead of multi piece insulator assemblies. Additionally, the second alternative clamp contacts 524 are larger, and extend through the clamp jaw holes 240 within the second alternative insulators 544, rather than just being positioned between the clamp jaws 206 on the inner side of the clamp jaw holes 240.

In some examples, each second alternative clamp contact 524 is formed of an electrically conductive material (e.g., metal). In some examples, each second alternative insulator 544 may be formed of an electrically insulating material. In some examples, each second alternative insulator 544 may be considered to be a kind of combination of the outer insulator cup 246, inner insulator cup 244, and insulator tube 252 of the insulated hand clamp 200 of FIGS. 2a-2d.

In the examples of FIGS. 5a-5d, the second alternative insulator 544 is generally cylindrical with a (e.g., generally cylindrical) bore 554 extending through the second alternative insulator 544. Upper sidewalls almost form a complete hollow cylinder, but are interrupted by a cutout 549 that allows for reception of a lead (e.g., conductive lug tongue 230 and/or wire 201) extending through the cutout 549 into the bore 554. As shown, within the bore 554, an annular inner ledge 502 projects inwards into the bore 554 from the inner sidewall surface of the second alternative insulator 544. The inner ledge 502 reduces the diameter of the bore 554 where it projects inward into the bore 554. In some examples, the inner ledge 502 helps to secure the second alternative clamp contact 524 within the second alternative insulator 544. Other than at the inner ledge 502 and the cutout 549, the bore 554 is shown as having a consistent diameter within the second alternative insulator 544.

In the examples of FIGS. 5a-5d, the outer diameter of the second alternative insulator 544 between the inner ledge 502 and a top end of the second alternative insulator 544 (e.g., proximate the cutout 549) is less than or equal to the diameter of the clamp jaw hole 240. This allows the upper portion of the second alternative insulator 544, between the inner ledge 502 and the top end, to move through the clamp jaw hole 240. Below the inner ledge 502 (e.g., between the inner ledge 502 and the bottom end - opposite the top end), the outer sidewall protrudes outwards slightly at a flange 504.

In the examples of FIGS. 5a-5d, the flange 504 increases the outer diameter of the second alternative insulator 544 to be slightly more than the diameter of the clamp jaw hole 240. Below the flange 504, the outer sidewall is shown receding back to having an outer diameter less than or equal to the clamp jaw hole 240, before protruding even farther outwards at an annular outer ledge 506. Below the annular outer ledge 506, the outer sidewall is shown receding back to having an outer diameter less than or equal to the clamp jaw hole 240.

In the examples of FIGS. 5a-5d, the outer ledge 506 of the second alternative insulator 544 abuts the inner surface 222 of the clamp jaw 206, while the flange 504 of the second alternative insulator 544 lies just above the outer surface 221 of the clamp jaw 206. As both the flange 504 and the outer ledge 506 have diameters larger than the clamp jaw hole 240, the positioning of the flange 504 and outer ledge 506 on either side of the clamp jaw hole 240 may resist and/or prevent (e.g., accidental) removal of the second alternative insulator 544 from the clamp jaw hole 240. In some examples, the flange 504 may be pliable enough to bend when force is applied, such that the second alternative insulator 544 may be snapped into and/or out of the clamp jaw hole 240 with sufficient applied force.

In the example of FIGS. 5a-5d, each second alternative clamp contact 524 is encased within the second alternative insulator 544, except for a bottom end 508 of the second alternative clamp contact 524. As shown, each second alternative clamp contact 524 is largely cylindrical, except for at the bottom end 508. The bottom end 508 of each second alternative clamp contact 524 is frustoconical, and positioned proximate the bottom end of the second alternative insulator 544, between the clamp jaws 206.

Like the clamp contact 224 of FIGS. 2a-2d, at least the second alternative clamp contact 524a in FIGS. 5a-5d is shown with a contact barrel 542. As shown, the contact barrel 542 has complementary engagement features that engage engagement features of a screw fastener 228 received in the contact barrel 542. In the examples of FIGS. 5a-5d a stripped/unsheated wire 201 of the clamp cable 150 is pressed against the second alternative clamp contact 524 when the screw fastener 228 is received in the contact barrel 542, thereby electrically connecting the wire 201 to the second alternative clamp contact 524.

While the lead of the clamp cable 150 is shown as being the stripped/unsheated wire 201 in the example of FIGS. 5a-5d, in some examples, the lead may instead be an insulated lug 232 (e.g., with or without a washer 226), as in FIGS. 2a-2d. While the screw fastener 228 is shown, in some examples, the alternative screw fastener 300 and/or nut 306 may be used instead.

In the examples of FIGS. 5a-5d, each second alternative clamp contact 524 includes an annular rim 510 at a top end (e.g., opposite the bottom end 508). Below the rim 510 is an annular recess, in which is fitted the inner ledge 502 of the second alternative insulator 544. As shown, the rim 510 lies atop the inner ledge 502 of the second alternative insulator 544 when the second alternative clamp contact 524 is fitted within the second alternative insulator 544. The interference fit of the inner ledge 502 of the second alternative insulator 544 in the annular recess of the second alternative clamp contact 524 secures the second alternative clamp contact 524 firmly within the second alternative insulator 544.

In some examples, the second alternative insulator 544 is molded onto and/or over the second alternative clamp contact 524. In some examples, the second alternative clamp contact 524 is snap fit into the second alternative insulator 544. In either case, the second alternative insulator 544 prevents the second alternative clamp contact 524 (and/or second alternative clamp contact assembly) from contacting the clamp jaw 206, thereby electrically insulating and/or isolating the clamp jaw 206.

In some examples, the single piece second alternative insulator 544 and second alternative clamp contact 524 makes for a simpler second alternative insulated hand clamp 500. In addition to being only one piece, no screw fastener 228 is needed to connect the second alternative lower clamp contact 224b to the lower clamp jaw 206b. Thus, in some examples, the second alternative lower clamp contact 224b may not include a barrel 542b. The single piece second alternative clamp contact 524 further allows for the second alternative insulated hand clamp 500 to easily accept any lead (e.g., conductive lug tongue 230 and/or wire 201), and/or easily swap leads in and/or out, by simply attaching and/or removing the screw fastener 228 (and/or by way of the alternative screw fastener 300 and nut 306, as discussed above).

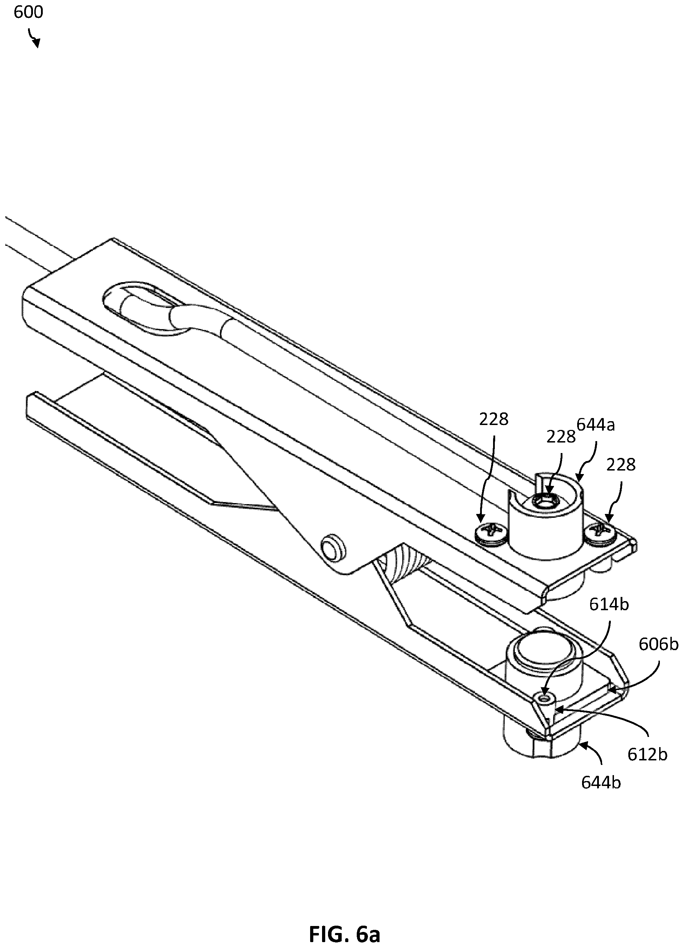

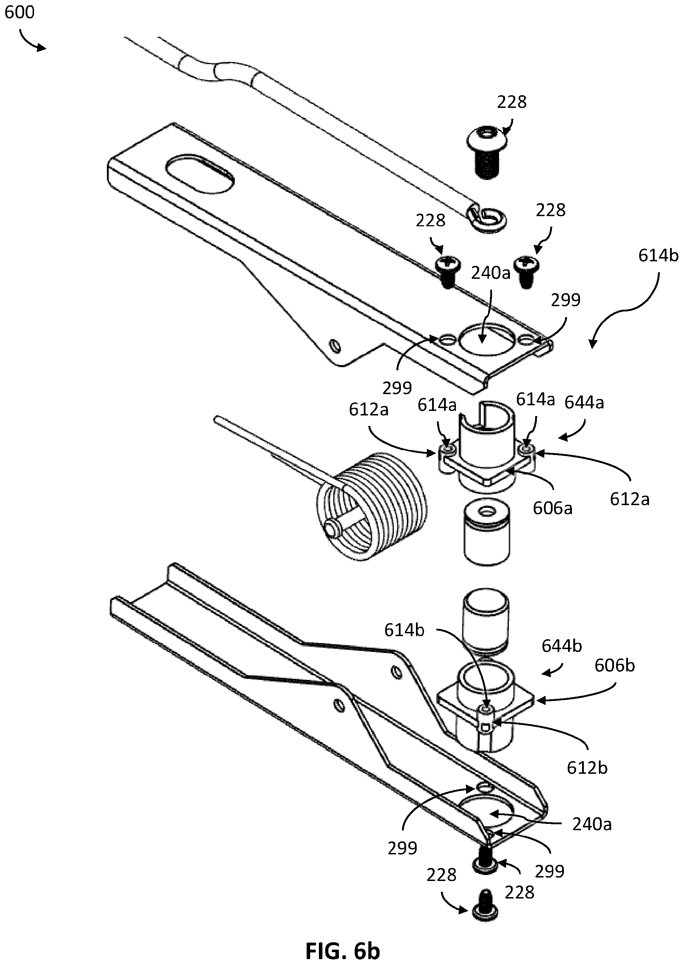

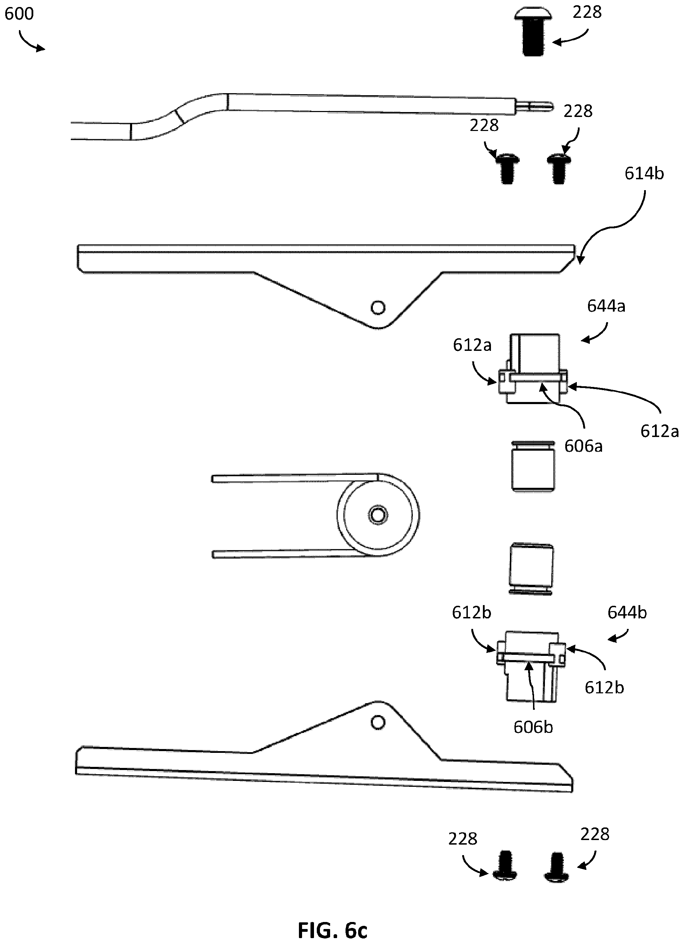

FIGS. 6a-6d show examples of a third alternative insulated hand clamp 600 that is similar to the second alternative insulated hand clamp 500, except that the third alternative insulated hand clamp 600 uses screw fasteners 228 to connect the third alternative insulators 644 to the clamp jaws 206, rather than a snap fit arrangement. In order to accommodate the screw fasteners 228, the clamp jaws 206 include several additional screw holes 299 on opposite sides of the clamp jaw hole 240. Additionally, the outer ledges 606 of the third alternative insulators 644 include standoffs 612 having standoff barrels 614 aligned with the screw holes 299. Engagement features of the screw fasteners 228 inserted through the screw holes 299 into the standoff barrels 614 engage with complementary engagement features in the standoff barrels 614 to connect the third alternative insulators 644 to the clamp jaws 206.

The disclosed insulated hand clamps 200 (and/or first, second, and third alternative insulated hand clamps 400, 500, 600) include clamp insulator assemblies (and/or single piece insulators 544, 644) that insulate and/or isolate the hand clamps 200, 400, 500, 600 from electrical current that might pass through clamp contact assemblies. The clamp insulator assemblies (and/or clamp insulators 544, 644) are relatively small and inexpensive, and attachment of the insulator assemblies (and/or clamp insulators 544, 644) to the clamp jaws 206 is also more secure and less susceptible to slippage or breakage than insulation that might be slipped on over the clamp handles 204. Additionally, insulating the clamp jaws 206 from the contact assemblies serves to insulate the entire hand clamp 200, 400, 500, 600, rather than just the clamp handles 204. The insulation and/or isolation allows for the hand clamps 200, 400, 500, 600 to be formed from conductive (e.g., metal) material that is more sturdy and/or less susceptible to breaking and/or melting in harsh high heat industrial (e.g., welding) environments.

Some of the present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type refers to actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, a welding-type tool refers to a tool suitable for and/or capable of actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for actual live welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for actual live welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.

Certain embodiments of the invention are described in the following clauses:
Clause 1. An electrically insulated hand clamp, comprising:
   a conductive clamp jaw;
   a clamp contact assembly comprising a conductive contact electrically connected to a conductive lead; and
   a clamp insulator that electrically insulates the conductive clamp jaw from the contact assembly.
Clause 2. The electrically insulated hand clamp of clause 1, wherein the conductive lead comprises a conductive wire or a conductive lug tongue in electrical communication with the conductive wire.
Clause 3. The electrically insulated hand clamp of clause 2, wherein the conductive lead comprises the conductive lug tongue, the conductive clamp jaw comprises a clamp jaw hole, the conductive lug tongue comprises a lug tongue hole aligned with the clamp jaw hole, and the clamp contact assembly further comprises a fastener extending through the lug tongue hole to electrically connect the conductive contact to the conductive lug tongue.
Clause 4. The electrically insulated hand clamp of clause 1, wherein the clamp insulator comprises a hollow insulator tube positioned between a conductor of the clamp contact assembly and the clamp jaw within a clamp jaw hole of the conductive clamp jaw, the hollow insulator tube thereby insulating the conductive clamp jaw from the conductor of the clamp contact assembly.
Clause 5. The electrically insulated hand clamp of clause 4, wherein the conductor comprises the conductive contact or a fastener of the clamp contact assembly.
Clause 6. The electrically insulated hand clamp of clause 5, wherein the conductor comprises a first conductor of the clamp contact assembly, the clamp insulator being in further contact with a second conductor of the clamp contact assembly.
Clause 7. The electrically insulated hand clamp of clause 6, wherein the second conductor comprises the conductive lead, the fastener, the conductive contact, or a conductive washer.
Clause 8. The electrically insulated hand clamp of clause 1, wherein the conductive clamp jaw is part of a clamp half comprising a clamp handle and a clamp connecting portion positioned between the clamp handle and the conductive clamp jaw.
Clause 9. The electrically insulated hand clamp of clause 8, wherein the clamp half comprises a first clamp half, the clamp handle comprises a first clamp handle, the clamp connecting portion comprises a first clamp connecting portion, and the conductive clamp jaw comprises a first conductive clamp jaw, the electrically insulated hand clamp further comprising a second clamp half comprising a second clamp handle, a second conductive clamp jaw, and a second clamp connecting portion positioned between the second clamp handle and the second clamp jaw.
Clause 10. The electrically insulated hand clamp of clause 9, wherein the first clamp connecting portion comprises first aligned pin holes, and the second clamp connecting portion comprises second aligned pin holes, the electrically insulated hand clamp further comprising:
   a spring positioned between the first clamp half and the second clamp half, the spring comprising a first end, a second end, and spiral between the first end and second end, the first end of the spring contacting the first clamp half, and the second end of the spring contacting the second clamp half; and
   a pivot pin connecting the first connecting portion of the first clamp half to the second connecting portion of the second clamp half by extending through the first aligned pin holes in the first clamp half, the second aligned pin holes in the second clamp half, and the spiral of the spring.
Clause 11. A welding-type system, comprising:
   a piece of welding-type equipment;
   an electrical cable comprising:
      a first end connected to the piece of welding-type equipment, and
      a second end comprising a conductive lead; and
   an electrically insulated hand clamp comprising:
      a conductive clamp jaw,
      a clamp contact assembly comprising a conductive contact electrically connected to the conductive lead, and
      a clamp insulator that electrically insulates the clamp jaw from the contact assembly.
Clause 12. The welding-type system of clause 11, wherein the conductive lead comprises a conductive wire or a conductive lug tongue in electrical communication with the conductive wire.
Clause 13. The welding-type system of clause 12, wherein the conductive lead comprises the conductive lug tongue, the conductive clamp jaw comprises a clamp jaw hole, the conductive lug tongue comprises a lug tongue hole aligned with the clamp jaw hole, and the clamp contact assembly further comprises a fastener extending through the lug tongue hole to electrically connect the conductive contact to the conductive lug tongue.
Clause 14. The welding-type system of clause 11, wherein the clamp insulator comprises a hollow insulator tube positioned between a conductor of the clamp contact assembly and the clamp jaw within a clamp jaw hole of the conductive clamp jaw, the hollow insulator tube thereby insulating the clamp jaw from the conductor of the clamp contact assembly.
Clause 15. The welding-type system of clause 14, wherein the conductor comprises the conductive contact or a fastener of the clamp contact assembly.
Clause 16. The welding-type system of clause 15, wherein the conductor comprises a first conductor of the clamp contact assembly, the clamp insulator being in further contact with a second conductor of the clamp contact assembly.
Clause 17. The welding-type system of clause 16, wherein the second conductor comprises the conductive lead, the fastener, the conductive contact, or a conductive washer.
Clause 18. The welding-type system of clause 11, wherein the conductive clamp jaw is part of a clamp half comprising a clamp handle and a clamp connecting portion positioned between the clamp handle and the clamp jaw.
Clause 19. The welding-type system of clause 18, wherein the clamp half comprises a first clamp half, the clamp handle comprises a first clamp handle, the clamp connecting portion comprises a first clamp connecting portion, and the conductive clamp jaw comprises a first conductive clamp jaw, the electrically insulated hand clamp further comprising a second clamp half comprising a second clamp handle, a second conductive clamp jaw, and a second clamp connecting portion positioned between the second clamp handle and the second conductive clamp jaw.
Clause 20. The welding-type system of clause 19, wherein the first clamp connecting portion comprises first aligned pin holes, and the second clamp connecting portion comprises second aligned pin holes, the electrically insulated hand clamp further comprising:
   a spring positioned between the first clamp half and the second clamp half, the spring comprising a first end, a second end, and spiral between the first end and second end, the first end of the spring contacting the first clamp half, and the second end of the spring contacting the second clamp half; and
   a pivot pin connecting the first connecting portion of the first clamp half to the second connecting portion of the second clamp half by extending through the first aligned pin holes in the first clamp half, the second aligned pin holes in the second clamp half, and the spiral of the spring.

## Claims

1. An electrically insulated hand clamp, comprising:
a conductive clamp jaw;
a clamp contact assembly comprising a conductive contact electrically connected to a conductive lead; and
a clamp insulator that electrically insulates the conductive clamp jaw from the contact assembly.

2. The electrically insulated hand clamp of claim 1, wherein the conductive lead comprises a conductive wire or a conductive lug tongue in electrical communication with the conductive wire.

3. The electrically insulated hand clamp of claim 2, wherein the conductive lead comprises the conductive lug tongue, the conductive clamp jaw comprises a clamp jaw hole, the conductive lug tongue comprises a lug tongue hole aligned with the clamp jaw hole, and the clamp contact assembly further comprises a fastener extending through the lug tongue hole to electrically connect the conductive contact to the conductive lug tongue.

4. The electrically insulated hand clamp of claim 1, wherein the clamp insulator comprises a hollow insulator tube positioned between a conductor of the clamp contact assembly and the clamp jaw within a clamp jaw hole of the conductive clamp jaw, the hollow insulator tube thereby insulating the conductive clamp jaw from the conductor of the clamp contact assembly.

5. The electrically insulated hand clamp of claim 4, wherein the conductor comprises the conductive contact or a fastener of the clamp contact assembly.

6. The electrically insulated hand clamp of claim 5, wherein the conductor comprises a first conductor of the clamp contact assembly, the clamp insulator being in further contact with a second conductor of the clamp contact assembly, and optionally
wherein the second conductor comprises the conductive lead, the fastener, the conductive contact, or a conductive washer.

7. The electrically insulated hand clamp of claim 1, wherein the conductive clamp jaw is part of a clamp half comprising a clamp handle and a clamp connecting portion positioned between the clamp handle and the conductive clamp jaw.

8. The electrically insulated hand clamp of claim 7, wherein the clamp half comprises a first clamp half, the clamp handle comprises a first clamp handle, the clamp connecting portion comprises a first clamp connecting portion, and the conductive clamp jaw comprises a first conductive clamp jaw, the electrically insulated hand clamp further comprising a second clamp half comprising a second clamp handle, a second conductive clamp jaw, and a second clamp connecting portion positioned between the second clamp handle and the second clamp jaw, and optionally
wherein the first clamp connecting portion comprises first aligned pin holes, and the second clamp connecting portion comprises second aligned pin holes, the electrically insulated hand clamp further comprising:
a spring positioned between the first clamp half and the second clamp half, the spring comprising a first end, a second end, and spiral between the first end and second end, the first end of the spring contacting the first clamp half, and the second end of the spring contacting the second clamp half; and
a pivot pin connecting the first connecting portion of the first clamp half to the second connecting portion of the second clamp half by extending through the first aligned pin holes in the first clamp half, the second aligned pin holes in the second clamp half, and the spiral of the spring.

9. A welding-type system, comprising:
a piece of welding-type equipment;
an electrical cable comprising:
a first end connected to the piece of welding-type equipment, and
a second end comprising a conductive lead; and
an electrically insulated hand clamp comprising:
a conductive clamp jaw,
a clamp contact assembly comprising a conductive contact electrically connected to the conductive lead, and
a clamp insulator that electrically insulates the clamp jaw from the contact assembly.

10. The welding-type system of claim 9, wherein the conductive lead comprises a conductive wire or a conductive lug tongue in electrical communication with the conductive wire, and optionally
wherein the conductive lead comprises the conductive lug tongue, the conductive clamp jaw comprises a clamp jaw hole, the conductive lug tongue comprises a lug tongue hole aligned with the clamp jaw hole, and the clamp contact assembly further comprises a fastener extending through the lug tongue hole to electrically connect the conductive contact to the conductive lug tongue.

11. The welding-type system of claim 9, wherein the clamp insulator comprises a hollow insulator tube positioned between a conductor of the clamp contact assembly and the clamp jaw within a clamp jaw hole of the conductive clamp jaw, the hollow insulator tube thereby insulating the clamp jaw from the conductor of the clamp contact assembly.

12. The welding-type system of claim 11, wherein the conductor comprises the conductive contact or a fastener of the clamp contact assembly.

13. The welding-type system of claim 12, wherein the conductor comprises a first conductor of the clamp contact assembly, the clamp insulator being in further contact with a second conductor of the clamp contact assembly, and optionally
wherein the second conductor comprises the conductive lead, the fastener, the conductive contact, or a conductive washer.

14. The welding-type system of claim 9, wherein the conductive clamp jaw is part of a clamp half comprising a clamp handle and a clamp connecting portion positioned between the clamp handle and the clamp jaw.

15. The welding-type system of claim 14, wherein the clamp half comprises a first clamp half, the clamp handle comprises a first clamp handle, the clamp connecting portion comprises a first clamp connecting portion, and the conductive clamp jaw comprises a first conductive clamp jaw, the electrically insulated hand clamp further comprising a second clamp half comprising a second clamp handle, a second conductive clamp jaw, and a second clamp connecting portion positioned between the second clamp handle and the second conductive clamp jaw, and optionally
wherein the first clamp connecting portion comprises first aligned pin holes, and the second clamp connecting portion comprises second aligned pin holes, the electrically insulated hand clamp further comprising:
a spring positioned between the first clamp half and the second clamp half, the spring comprising a first end, a second end, and spiral between the first end and second end, the first end of the spring contacting the first clamp half, and the second end of the spring contacting the second clamp half; and
a pivot pin connecting the first connecting portion of the first clamp half to the second connecting portion of the second clamp half by extending through the first aligned pin holes in the first clamp half, the second aligned pin holes in the second clamp half, and the spiral of the spring.
